# EUROPEAN PATENT APPLICATION

(11) **EP 4 831 757 A1**
(43) Date of publication of application: **28.10.2026**
(21) Application number: 24906565.7
(22) Date of filing: 20.12.2024
(51) Int. Cl.: G05B 19/418

(54) **MOTION CONTROL SYSTEM, MANAGEMENT SYSTEM FOR AUTOMATED FLOW, AND MOTION CONTROL METHOD**

(30) Priority: 22.12.2023 CN 202311787515
(71) Applicant: Megarobo Technologies Co., Ltd., Beijing 102208 (CN)
(72) Inventor: SONG, Mengqi, Beijing 102208 (CN); LI, Gang, Beijing 102208 (CN)
(74) Representative: Grünecker Patent- und Rechtsanwälte PartG mbB
(86) International application number: PCT/CN2024/141129
(87) International publication number: WO 2025/131094

(57) **Abstract**

Provided are a motion control system (200), a management system for an automated flow, and a motion control method. The motion control system (200) comprises a first control module (210) and a second control module (220), wherein the first control module (210) is respectively connected to a power production management system for an automated flow, and the second control module (220), and is used for acquiring a first instruction issued by the power production management system; and the second control module (220) is connected to devices (300) in the automated flow, and is used for controlling, on the basis of the first instruction, a target device to execute an action corresponding to the first instruction, and reporting, to the power production management system via the first control module (210), feedback information of the target device executing the action.

## Description

This application claims the priority to Chinese Patent Application No. 202311787515.6, titled "MOTION CONTROL SYSTEM, MANAGEMENT SYSTEM FOR AUTOMATED FLOW, AND MOTION CONTROL METHOD", filed on December 22, 2023 with the China National Intellectual Property Administration, which is incorporated herein by reference in its entirety.

### FIELD

The present disclosure relates to the technical field of automation, and in particular to an action control system, a management system for an automated process, an action control method, an electronic device, and a storage medium.

### BACKGROUND

Automation technology is widely applied in various technical fields. In an automated process, it is generally required to connect and coordinate multiple automated devices in an appropriate manner and flow to realize the automation of experiments or workflows. However, since different devices differ in aspects such as communication, interaction, messages, and business logic, the cost of integrating these devices into an automated system is high.

An automated process for a laboratory is taken as an example. In conventional life science laboratories, automated devices are typically decentralized and operate independently, which are often supplied by different suppliers and have varied functions and operation modes. Due to incompatibility between devices and the lack of unified standards, integrating these devices into a fully automated system and achieving continuous and efficient operations between devices involves enormous costs and significant technical challenges.

In the related art, programs interfacing with different devices are typically developed and integrated directly into a process control system (such as a power production management system, PMS for short) in a host computer, resulting in considerable development difficulty. Particularly, when a large number of devices are interfaced, the following issues exist. Firstly, a great amount of device driver code is integrated into one project, which is not only confusing but also incurs high maintenance costs. Secondly, for incremental devices, the iteration cost of integrated development is extremely high. Thirdly, the operations between devices often interfere with each other. If some devices operate unstably, the overall stability is affected.

### SUMMARY

To at least partially address the issues in the related art, according to a first aspect of the present disclosure, an action control system is provided. The action control system includes a first control module and a second control module. The first control module is connected to a process control system of an automated process and the second control module, and is configured to acquire a first instruction issued by the process control system. The second control module is connected to one or more devices in the automated process, and is configured to control, based on the first instruction, a target device to execute an action corresponding to the first instruction, and report feedback information of the target device executing the action to the process control system via the first control module.

In a possible implementation, the first control module is further configured to:
upon receiving the first instruction, manage the first instruction, the target device targeted by the first instruction, and a first task involved by the first instruction to create and start the first task, and
report the feedback information sent by the second control module to the process control system; and
the second control module is further configured to:
   after the first task is started, execute a device control operation based on the first task to control the target device to execute an action corresponding to the first task, and
   send the feedback information to the first control module, where
   the device control operation includes instruction invoking and status maintenance for a physical device of the target device.

In a possible implementation, the first control module includes a system control unit and an event management unit connected to each other, where
the system control unit is configured to:
   add, after the action control system is started, instructions supported in the action control system, pre-configured devices, and methods for creating tasks involved by the instructions into respective dictionaries, to store names of targeted devices of the instructions, names of the tasks involved by the instructions, and the methods for creating the tasks, and
   create and start, upon receiving the first instruction, the first task related to the first instruction based on the dictionaries; and
the event management unit is configured to report an event involved in the first task and an event involved in the feedback information sent by the second control module to the process control system.

In a possible implementation, the system control unit includes a device management sub-unit and a task management sub-unit, where
the device management sub-unit is configured to:
   add, after the action control system is started, both primary devices and secondary devices among the pre-configured devices into a device dictionary, and
   determine, upon receiving the first instruction, whether a primary device and a secondary device targeted by the first instruction are in the device dictionary, where
   the primary devices are devices that primarily execute the tasks, and the secondary devices are devices that assist the primary devices in executing the tasks; and
the task management sub-unit is configured to:
   store, after the action control system is started, the methods for creating the tasks involved by the instructions into a task dictionary,
   determine, upon receiving the first instruction, whether the first task is in the task dictionary, and
   add, in response to the first task being started, a task instance of the first task into the task dictionary, and remove, in response to the first task being completed or terminated, the task instance from the task dictionary.

In a possible implementation, the first instruction includes an asynchronous instruction, where
the system control unit is further configured to: report first response information to the process control system, the first response information being a response by the system control unit and the second control module to the asynchronous instruction, and send second response information to the event management unit, the second response information being a response by the second control module to the asynchronous instruction; and
the event management unit is further configured to report the second response information to the process control system as notification information, where
the first response information is the response to a synchronous portion of the asynchronous instruction, and the second response information is the response to an asynchronous portion of the asynchronous instruction.

In a possible implementation, the second control module is configured to execute the asynchronous portion of the asynchronous instruction only in response to the first response information indicating that the synchronous portion of the asynchronous instruction is executed successfully, and send the second response information to the event management unit.

In a possible implementation, the feedback information includes error reporting information of at least one first error event, and the event management unit is further configured to: upon receiving the error reporting information, report the error reporting information to the process control system as notification information, and control the target device to suspend a first action currently executed, where the first action is an action affected by the at least one first error event.

In a possible implementation, the first instruction includes a fault tolerance instruction, where
the event management unit is further configured to:
   for the error reporting information of each first error event among the at least one first error event,
   acquire first information of at least one fault tolerance method for the first error event, and report the first information to the process control system, to cause the process control system to select a fault tolerance method from the at least one fault tolerance method based on the first information and issue the fault tolerance instruction; and
   upon receiving the fault tolerance instruction issued by the process control system, execute, based on a preset condition, a clearing operation for clearing the error reporting information of the first error event; and
control the target device to continue to execute the first action at least based on a case that the error reporting information of the at least one first error event is cleared.

In a possible implementation, the event management unit is further configured to: determine a priority of the at least one first error event; and execute, in response to determining that a priority of a current first error event is higher than priorities of other first error events, a clearing operation for the current first error event.

In a possible implementation, the at least one first error event includes a task-level error event, where
the event management unit is further configured to:
in response to determining that one of the at least one first error event belongs to the task-level error event, directly execute a clearing operation for the task-level error event, and control the target device to continue to execute the first action;
execute a first fault tolerance task for the task-level error event based on a fault tolerance method selected by the process control system from the at least one fault tolerance method; and
in response to the first fault tolerance task being executed unsuccessfully, upload error reporting information of a second error event, and control the target device to suspend a second action, where
the second action is an action currently affected by the second error event.

In a possible implementation, the at least one first error event includes a device-level error event, where
the event management unit is further configured to:
in response to determining that one of the at least one first error event belongs to the device-level error event, execute a self-check operation for the device-level error event; and
in response to the self-check operation being executed successfully, execute a clearing operation for the device-level error event.

In a possible implementation, the event management unit is further configured to:
in response to the self-check operation being executed unsuccessfully, execute a second fault tolerance task for the device-level error event based on a fault tolerance method selected by the process control system from the at least one fault tolerance method;
in response to the second fault tolerance task being executed successfully, execute the clearing operation for the device-level error event, and control the target device to continue to execute the first action; and
in response to the second fault tolerance task being executed unsuccessfully, upload error reporting information of a third error event, and control the target device to suspend a third action, where
the third action is an action currently affected by the third error event.

In a possible implementation, the action control system acquiring the first instruction issued by the process control system includes: acquiring a type, a device identifier, an Internet protocol, IP, address, and a port number of the target device targeted by the first instruction.

According to a second aspect of the present disclosure, a management system for an automated process is further provided, which includes a process control system of the automated process and the action control system described above.

According to a third aspect of the present disclosure, an action control method is further provided. The action control method includes:
acquiring a first instruction issued by a process control system of an automated process;
controlling, based on the first instruction, a target device in the automated process to execute an action corresponding to the first instruction; and
reporting feedback information of the target device executing the action to the process control system.

According to a fourth aspect of the present disclosure, an electronic device is further provided. The electronic device includes a processor and a memory, where the memory stores computer program instructions, and the computer program instructions, when executed by the processor, are configured to perform the action control method described above.

According to a fifth aspect of the present disclosure, a storage medium is further provided. The storage medium stores program instructions, where the program instructions, when executed, are configured to perform the action control method described above.

According to embodiments of the present disclosure, the action control system, serving as a bridge connecting the process control system and the device, may accurately control the target device to execute the corresponding action based on the instruction issued by the process control system, and report the feedback information of the target device executing the action to the process control system. Therefore, with this solution, precise control for various types of devices in the automated process is achieved, and a good interaction between the devices and the process control system is achieved. Moreover, for each device, the control logic of the action control system does not depend on the process control system, and thus the operations of different devices do not interfere with each other. As a result, the automated process runs stably, and maintenance costs are low. In addition, in a case that a device in the automated process is changed, it is not required to update program code for controlling the device in the process control system, and it is only required to add a control module corresponding to the newly connected device into the action control system according to this solution. Therefore, this solution offers the advantages of low iteration cost and convenient maintenance. Consequently, the automated process achieves high management efficiency, low management costs, and an excellent user experience.

A series of simplified concepts are introduced in the summary, which are further described in detail in the detailed description. This section is not intended to limit key features and essential technical features of the claimed technical solutions, nor is it intended to determine the protection scope of the claimed technical solutions.

The advantages and features of the present disclosure will be described in detail below with reference to the drawings.

### BRIEF DESCRIPTION OF THE DRAWINGS

The following drawings of the present disclosure are incorporated herein as a part of the present disclosure for understanding the present disclosure. The embodiments of the present disclosure and descriptions thereof are shown in the drawings to explain the principles of the present disclosure. In the drawings:
FIG. 1 shows a schematic block diagram of a management system for an automated process in the related art;
FIG. 2a shows a schematic block diagram of an action control system according to an embodiment of the present disclosure;
FIG. 3 shows a schematic block diagram of a project hierarchy structure of an action control system according to an embodiment of the present disclosure;
FIG. 4 shows a schematic block diagram of an action control system according to yet another embodiment of the present disclosure;
FIG. 5 shows a schematic block diagram of a process control system according to an embodiment of the present disclosure;
FIG. 6a and FIG. 6b show activity diagrams of an asynchronous instruction according to different embodiments of the present disclosure;
FIG. 7 shows an error reporting flowchart according to an embodiment of the present disclosure;
FIG. 8 shows a fault tolerance flowchart according to an embodiment of the present disclosure;
FIG. 9a and FIG. 9b show activity diagrams of fault tolerance according to different embodiments of the present disclosure;
FIG. 10 shows a schematic block diagram of a management system for an automated process according to an embodiment of the present disclosure;
FIG. 11 shows a schematic flowchart of an action control method according to an embodiment of the present disclosure; and
FIG. 12 shows a schematic diagram of an electronic device according to an embodiment of the present disclosure.

### DETAILED DESCRIPTION

In the following description, numerous details are provided to enable a thorough understanding of the present disclosure. However, those skilled in the art can understand that the following description merely exemplarily illustrates preferred embodiments of the present disclosure, and the present disclosure may be implemented without one or more of such details. In addition, to avoid confusion with the present disclosure, some technical features known in the art are not described in detail.

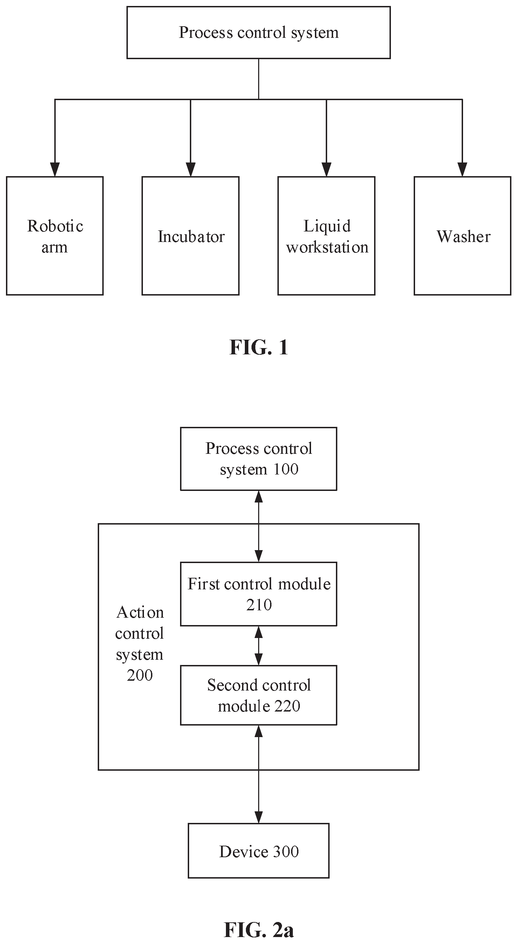

As previously mentioned, for the management system for the automated process in the related art, a process control system (such as a power production management system, PMS for short) is typically installed in a host computer connected to devices, and programs directly interfacing with different devices are developed and integrated directly into the PMS. A process management system of a life science laboratory project is taken as an example. FIG. 1 shows a schematic block diagram of a management system for an automated process in the related art. As shown in FIG. 1, four devices including a robotic arm, an incubator, a workstation, and a washer are execution devices in the automated process. These four devices are all connected to a host computer installed with a PMS. Before executing the automated process, developers write program code for controlling these four devices according to the current process in the PMS, which is difficult to develop, and results in a large amount of driver code for controlling the devices. The large amount of driver code is chaotically arranged, thereby incurring high maintenance costs. Moreover, once the process changes, for example, the number of controlled devices increases, the resulting iteration cost is extremely high. For example, if multiple other devices in addition to the four devices shown in FIG. 1 are connected into the process, the developers are required to write program code for controlling the newly connected devices in the PMS, and modify the program code for controlling the four devices, leading to a heavy workload and proneness to errors. In addition, since the operations of different devices interfere with each other, there exists the issue of poor overall stability.

To at least partially address the above technical issues, according to a first aspect of the present disclosure, an action control system is provided. The action control system is configured to control actions of all devices involved in the entire automated process. The action control system is connected to a PMS upward and to the various devices in the automated process downward, and controls the devices separately based on instructions from the PMS, ensuring efficient operation of the automated process. Moreover, for each device, the control logic of the action control system does not depend on the PMS, and thus the operations of different devices do not interfere with each other. As a result, the automated process runs stably, and maintenance costs are low. In addition, in a case that a device is changed, it is not required to update program code for controlling the device in the PMS, and it is only required to add a control module corresponding to the newly connected device in the PMS, thereby offering the advantages of low iteration cost and convenient maintenance.

FIG. 2a shows a schematic block diagram of an action control system 200 according to an embodiment of the present disclosure. As shown in FIG. 2a, the action control system 200 includes a first control module 210 and a second control module 220. The first control module 210 is connected to a process control system 100 of an automated process and the second control module 220, and is configured to acquire a first instruction issued by the process control system 100. The process control system 100 may be a PMS. In an embodiment, the action control system 200 acquiring the first instruction issued by the process control system 100 includes: acquiring a type, a device identifier, an Internet protocol (IP) address, and a port number of a target device targeted by the first instruction. It can be understood that the type of a device is related to functions, and devices with different functions have different types. For example, the type of a robotic arm is different from the type of a liquid workstation. In particular, for two devices with similar functions, if the models of the devices are different, the types of the devices may be different. For example, different models of robotic arms have different types. In an embodiment, the device identifier may be a device number, for example, an Arabic numeral may be used as the device identifier. It can be understood that different devices have different device identifiers. The device identifier may be a unique identifier of the device in the entire action control system 200. The first instruction may be information of a request message issued by the PMS. By acquiring multiple pieces of information about the target device, such as the type, the device identifier, the IP address, and the port number of the target device targeted by the first instruction, from the request message, precise control of the target device may be achieved. The first control module 210 may be any module capable of managing a general process. In an embodiment, the first control module 210 communicates with the PMS through any suitable communication interface to acquire the first instruction. For example, the first control module 210 includes a Web application programming interface (a Web API), and interacts with the PMS through the Web API.

The first instruction may be any one of a system instruction, a business instruction, and a fault tolerance instruction. The system instruction may be a general instruction preset by the system. The system instruction may be an instruction executed by all devices, and a name and a synchronous/asynchronous action of the instruction may be determined. The system instruction may include a resetting instruction, a closing instruction, a terminating instruction, a suspending instruction, a continuing instruction, a status acquiring instruction, a parameter acquiring instruction, and a parameter setting instruction. In an embodiment, the resetting instruction may be an instruction to reset a device to an available state. Upon receiving the resetting instruction, all tasks are terminated first, all errors are cleared, and then a pending operation (typically including device connection, device initialization, starting a heartbeat, and business check and error reporting after initialization) customized by a client during resetting is executed. The closing instruction may be an instruction to control the device to return to an unavailable state. Upon receiving the closing instruction, all tasks are terminated first, all errors are cleared, and then a pending operation (typically including closing the heartbeat, device de-initialization, and device disconnection) customized by the client during closing is executed. The terminating instruction may be an instruction to terminate all tasks and clear all task-level errors. The suspending instruction may be an instruction to cause the device to enter a pause state and suspend all tasks. The continuing instruction may be an instruction to cause the device to exit the pause state and continue all tasks. The status acquiring instruction may include a narrowly defined status acquiring instruction that can only acquire the status of the system, and a broadly defined status acquiring instruction that can acquire tasks, errors, and alarms inside the system. The parameter acquiring instruction may be an instruction to acquire a parameter of the system, and the parameter typically includes some important configurations. The parameter setting instruction may be an instruction to set the parameter of the system, and the parameter typically includes some important configurations. Some of these system instructions are synchronous instructions, and some are asynchronous instructions. For example, the status acquiring instruction, the parameter acquiring instruction, and the parameter setting instruction are synchronous instructions, and the resetting instruction, the closing instruction, the terminating instruction, the suspending instruction, and the continuing instruction are asynchronous instructions. The business instruction is an instruction with business meaning supported by a device. A class name of a task declared by the client according to the actual situation is a name of the instruction supported by the device. Upon receiving a business instruction request of the PMS, the first control module creates a task instance. A synchronous/asynchronous action of the business instruction may be determined by an invoker, that is, determined based on a parameter in the request message of the PMS. The fault tolerance instruction may be an instruction for the PMS to select and perform a certain fault tolerance method in response to an error. The fault tolerance instruction may be an asynchronous instruction. In an example, when the automated process is executed to a device node corresponding to the washer, the PMS issues a business instruction indicating controlling the washer to start operating. In an embodiment, the first control module 210 receives the business instruction through the Web API, executes general business logic related to the business instruction based on the first instruction, and sends the business instruction to the second control module 220.

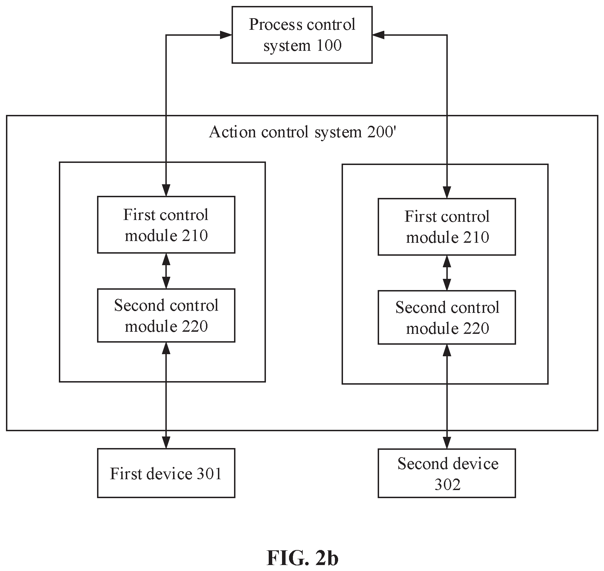

The second control module 220 is connected to one or more devices 300 in the automated process, and is configured to control, based on the first instruction, the target device to execute an action corresponding to the first instruction, and report feedback information of the target device executing the action to the process control system 100 via the first control module 210. The second control module 220 may be any module capable of managing device processes. Communication between the first control module 210 and the second control module 220 may be implemented in various suitable bidirectional communication modes. For example, communication between the first control module 210 and the second control module 220 is implemented through socket communication. Through sockets, a connection may be established and bidirectional data transmission may be implemented between the first control module 210 and the second control module 220. The second control module 220 may be connected to one or more devices 300. In a case that the second control module 220 is connected to multiple devices 300, the target device may be one or more of the multiple devices 300. In an embodiment, the second control module 220 is connected to one primary device and multiple secondary devices simultaneously. For example, the devices 300 connected to the second control module 220 include a robotic arm, a gripping jaw, and a guide rail, the gripping jaw is connected to an end of the robotic arm, and the robotic arm moves along the guide rail. For example, when the PMS issues an instruction to control the robotic arm to start, the first control module 210 sends the instruction to the second control module 220, and the second control module 220 executes instruction invoking at a physical device level to control the three devices, that is, the robotic arm, the gripping jaw, and the guide rail, to act simultaneously according to the instruction. In an embodiment, the second control module 220 controls the target device to start through instruction invoking functions, methods, or interfaces provided by a software development kit. Moreover, the second control module may receive the feedback information from the target device, and report the feedback information to the PMS via the first control module 210. For example, in a case that the first instruction is an instruction to control the target device to start, the feedback information includes status information on whether the target device is started successfully, or includes feedback information such as a fault alarm. In another example, the second control module 220 is connected to only one device 300. For example, the device connected to the second control module 220 in FIG. 2 is a washer. When the PMS issues a status monitoring instruction for the washer, the first control module 210 receives the status monitoring instruction through the Web API, and sends the status monitoring instruction to the second control module 220. The second control module 220 executes a status maintenance logic at the physical device level, and performs status query on the connected target device through methods or interfaces provided by the software development kit, so as to acquire status information of the target device. Then, the status information of the target device is reported to the PMS via the first control module 210.

FIG. 2b shows a schematic block diagram of an action control system 200' according to another embodiment of the present disclosure. As shown in FIG. 2b, the action control system 200' further includes multiple groups of the first control module 210 and the second control module 220. Different groups of the first control module 210 and the second control module 220 may correspond to different devices. A group of the first control module 210 and the second control module 220 may be referred to as a "device controller." For example, the automated process 200' shown in FIG. 2b includes two device controllers, which are used to control a first device 301 and a second device 302, respectively. In an embodiment, the number of the first control modules and the second control modules included in the action control system is set based on the number and types of devices involved in the actual automated process. For example, in a case that the automated process includes the four devices shown in FIG. 1, four device controllers may be set in the action control system 200, and these four device controllers may be connected to the robotic arm, the incubator, the workstation, and the washer, respectively.

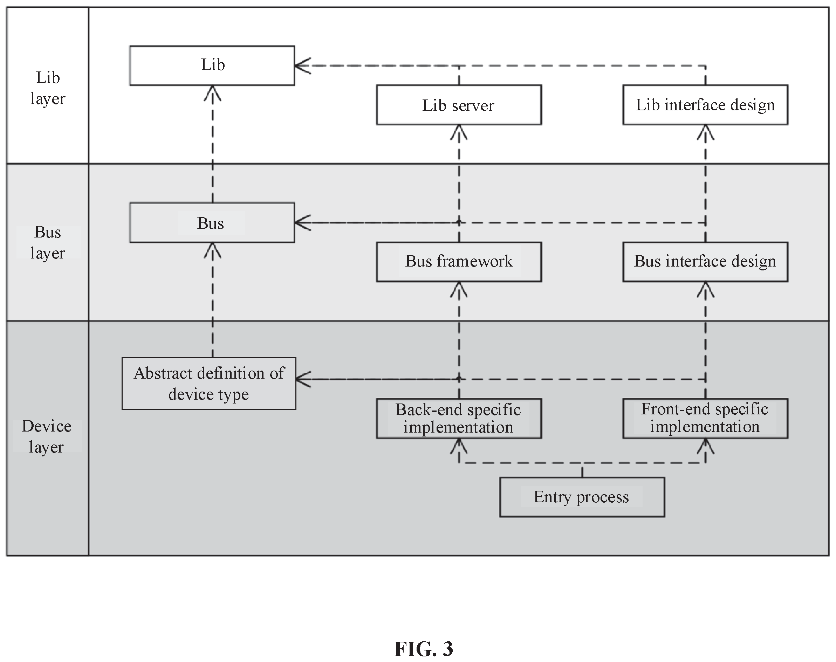

FIG. 3 shows a schematic block diagram of a project hierarchy structure of an action control system according to an embodiment of the present disclosure. As shown in FIG. 3, the entire system framework of the action control system includes a Lib layer, a Bus layer, and a Device layer. The Lib layer includes various development libraries, runtime libraries, and tool libraries, such as basic class libraries like graphics libraries, network libraries, and database connection libraries. The Bus layer includes an aggregated class library related to business. The Device layer includes specific device implementation and specific logic. As shown in FIG. 3, a Lib project may encapsulate commonly used tool classes. A Lib.Server project may encapsulate methods for providing interface services. A Lib.UI project may encapsulate classes related to commonly used interface operations. A Bus project may include global business logic, regardless of a front-end or a back-end, such as a general data definition. A Bus.Frame project may include general back-end business, and define network interfaces provided externally by the first control module and the second control module. The Bus.Frame project may include general back-end logic. A Bus.UI project may include general front-end business. In an abstract definition of the device type, a basic definition of the device may be implemented, regardless of the front-end or back-end. The back-end specific implementation may include back-end logic for implementing the device, for example, logic for providing an interface to the PMS and logic for controlling the device. The front-end specific implementation may include front-end logic for implementing the device, for example, logic for user interaction. An entry process includes the specific entry process of the device.

In an embodiment, the action control system 200 according to the embodiments of the present disclosure further includes a device control framework. The device control framework includes the first control module and the second control module. A set of general logic is provided in the device control framework, which may be used for integrated device programming. A user can develop the device control framework according to the requirements of the actual automated process, so as to obtain a "device controller" capable of controlling a device. For example, in a case that a new device is required to be connected to the action control system 200 in a certain laboratory project, developers can carry out development based on the device control framework provided by the action control system 200, and quickly construct device-side software that meets the requirements of the laboratory project to control the new device. It can be understood that in the action control system, the newly added device-side software is referred to as the device controller corresponding to the new device. In this example, the device control framework is a basic framework, which facilitates the developers to quickly construct device control software for controlling the newly connected device, and the device control software serves as the device controller of the device. In an embodiment, device controllers of various devices in the automated process may run on one computer, or may run on multiple computers that communicate with each other, which is not limited by the present disclosure. In addition, for the device controller installed on each computer, an independent device control process is generated each time the device controller is started. Multiple independent device control processes may be started simultaneously on the same computer. In the same automated process, multiple devices of the same model may be included. In this way, these devices may be managed and controlled by starting the same device controller multiple times. In this case, a new device control process is created each time the device controller is started, so that the multiple devices are managed simultaneously. The multiple device control processes are independent of each other, and separately manage and control their corresponding devices. In this way, multiple devices in the automated process are managed simultaneously, significantly improving the management efficiency and flexibility of the automated process. Moreover, by starting multiple device control processes on the same computer, simultaneous management and control of multiple devices are achieved, thereby improving work efficiency and fully meeting the requirement of a large number of devices in the laboratory automated process scenario.

As previously mentioned, in the automated process management in the related art, programs interfacing with different devices are usually developed and integrated directly into the PMS in the host computer, and when a large number of devices are to be interfaced, there are disadvantages such as chaotic code integration, high maintenance costs, high iteration costs of integrated development, and poor overall stability. Moreover, in a case that there are conflicts in the environments on which some devices depend or the devices have conflicts with the PMS, it is required to additionally develop an intermediate proxy layer in the PMS for forwarding, resulting in logical inconsistency. The above-described action control system according to the embodiments of the present disclosure, serving as a bridge connecting the process control system and the devices, may accurately control the target device to execute the corresponding action based on the instruction issued by the process control system, and report the feedback information of the target device executing the action to the process control system. Therefore, with this solution, precise control for various types of devices in the automated process is achieved, and a good interaction between the devices and the process control system is achieved. Moreover, for each device, the control logic of the action control system does not depend on the process control system, and thus the operations of different devices do not interfere with each other. As a result, the automated process runs stably, and maintenance costs are low. In addition, in a case that a device in the automated process is changed, it is not required to update program code for controlling the device in the process control system, and it is only required to add a control module corresponding to the newly connected device into the action control system according to this solution. Therefore, this solution offers the advantages of low iteration cost and convenient maintenance. Consequently, the automated process achieves high management efficiency, low management costs, and an excellent user experience.

In some embodiments, the first control module 210 is further configured to: upon receiving the first instruction, manage the first instruction, the target device targeted by the first instruction, and a first task involved by the first instruction to create and start the first task, and report the feedback information sent by the second control module 220 to the process control system PMS. The second control module 220 is further configured to: after the first task is started, execute a device control operation based on the first task to control the target device to execute an action corresponding to the first task, and send the feedback information to the first control module. The device control operation includes instruction invoking and status maintenance for a physical device of the target device.

According to the embodiments of the present disclosure, a task managed by the first control module 210 at least includes specific tasks involved in the first instruction. The first control module 210 may adopt any suitable logic to manage the received first instruction, the target device targeted by the first instruction, and the first task involved by the first instruction. The first instruction is information contained in the request message issued by the PMS. For example, upon receiving the request message about the first instruction, the first control module 210 checks the validity of the request message, including that, for example, whether the target device targeted by the first instruction exists and whether the first instruction exists, and if both are determined to exist, it is determined that the request message is valid. Then, the type to which the first instruction belongs is determined, and the corresponding general business logic is executed according to the type of the first instruction. For example, it is determined whether the first instruction is a synchronous instruction or an asynchronous instruction. If the first instruction is a synchronous instruction, the execution result is returned only after the execution is completed. If the first instruction is an asynchronous instruction, the execution result is returned after a preparation phase of the first instruction is completed, and an asynchronous notification is returned after an execution phase of the first instruction is completed. As previously mentioned, the first instruction may be a system instruction, a business instruction, or a fault tolerance instruction. The first control module may adopt different management logic for different instructions. For example, when the first instruction is a task instruction, operations of creating the first task, checking the first task, and starting the first task are executed in sequence. The first control module 210 sends information for starting the first task to the second control module 220 through socket communication. The second control module 220 executes the device control operation based on the first task to control the target device to execute the action corresponding to the first task, and sends the feedback information to the first control module 210. The device control operation may be instruction invoking for the physical device of the target device, or status maintenance for the physical device of the target device. It can be understood that under different circumstances of the first instruction, the action executed by the target device may be different. The action executed by the target device may be, for example, starting, suspending, and the like, or may be reading device status, processing status data, returning device status, and the like.

In the above solution, the first control module manages the first instruction, the target device targeted by the first instruction, and the first task involved by the first instruction, thereby ensuring efficient and orderly internal processing logic. Based on the first instruction sent by the first control module, the second control module causes the target device to complete the corresponding action, and reports the feedback information during the target device executing the action to the process control system via the first control module and the second control module. In this way, the unified management of the target device by the process control system is realized, and the interaction between the process control system and the target device is ensured, so that the control of the device is precise and the efficient operation of the automated process is ensured, thereby improving the reliability and stability of the action control system.

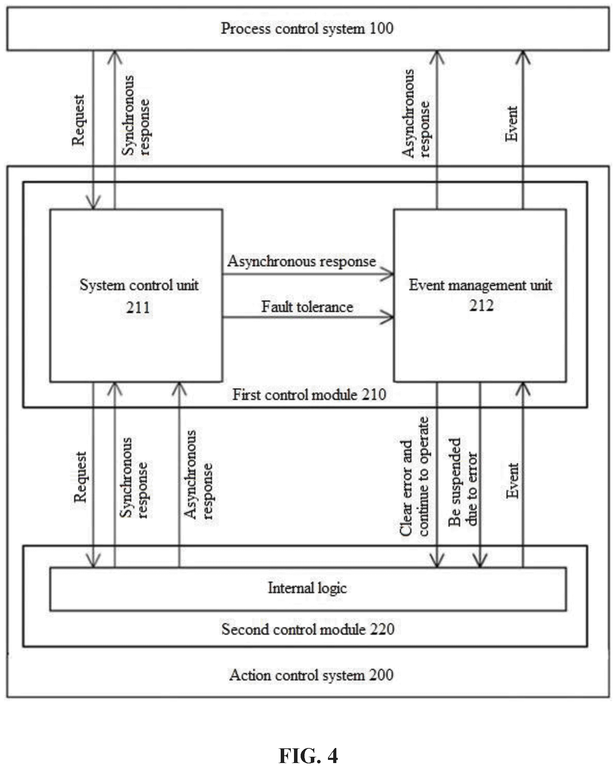

FIG. 4 shows a schematic block diagram of an action control system according to another embodiment of the present disclosure. As shown in FIG. 4, the first control module 210 includes a system control unit 211 and an event management unit 212 connected to each other. The system control unit 211 is configured to: add, after the action control system 200 is started, instructions supported in the action control system, pre-configured devices, and methods for creating tasks involved by the instructions into respective dictionaries, to store names of targeted devices of the instructions, names of the tasks involved by the instructions, and the methods for creating the tasks, and create and start, upon receiving the first instruction, the first task related to the first instruction based on the dictionaries. The event management unit 212 is configured to report an event involved in the first task and an event involved in the feedback information sent by the second control module 220 to the process control system 100.

According to the embodiment of the present disclosure, the dictionaries for storing the names of the targeted devices of the instructions, the names of the tasks involved by the instructions, and the methods for creating the tasks may be in any form. Exemplarily rather than restrictively, the dictionary may be a data structure in the form of "Key->Value", which is used to record the support information of the devices of the instructions. For example, the Key may be a combination of a name of a device and a name of a task, and the Value may be a method for creating the task. In an embodiment, after the action control system 200 is started, for example, when a "device controller" corresponding to a certain device is turned on and in a running state, the system control unit 211 is loaded. In an example, the above dictionaries may include an instruction dictionary, a device dictionary, and a task dictionary. When loading the system control unit 211, the system control unit 211 acquires all supported instructions in a back-end program set through a reflection mechanism and adds the instructions into the instruction dictionary; loads pre-configured devices in all configuration files and adds the pre-configured devices into the device dictionary of the system control unit 211; and stores the names of the tasks involved by the instructions and the methods for creating the tasks into the task dictionary. After the PMS issues a control instruction for a certain device, the system control unit 211 searches for the method for creating the first task involved by the current instruction based on the received instruction and the maintained dictionaries, so as to accurately create the first task and start the first task. In addition, the event management unit 212 may be a unit that performs event interaction with the PMS. In an embodiment, the event management unit 212 performs error reporting, fault tolerance, alarming, notification, and the like, by invoking a network interface provided by the PMS.

In the above solution, by reasonably configuring the system control unit and the event management unit in the first control module, the maintainability, scalability, and reliability of the entire action control system are improved, making functional modules of the action control system independent, decoupled, and flexible.

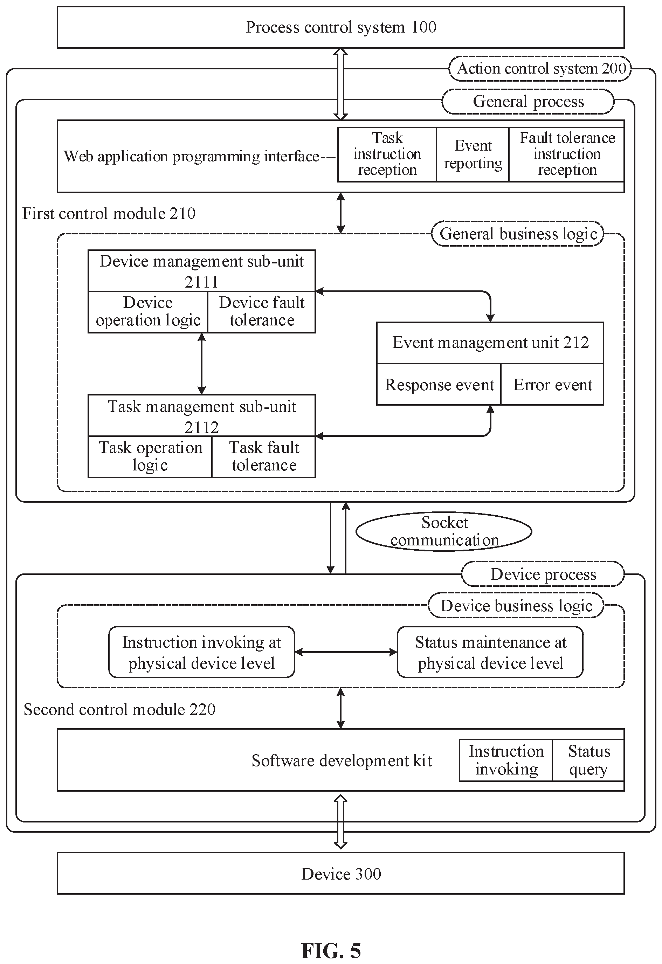

It can be understood that the main logic in the system control unit 211 depends on the device. In an embodiment, for each device control framework in the action control system 200, general device logic is implemented in a device base class, and the client inherits the device base class and rewrites an abstract method of the device base class to realize the polymorphism of specific device control. For example, the system control unit 211 may control the action executed based on the instruction through the information in the request message of the PMS. The information in the request message may include the type of the instruction, the device identifier, and a task parameter. The system control unit 211 may create and start the task involved by the instruction based on the information. FIG. 5 shows a schematic block diagram of a process control system according to yet another embodiment of the present disclosure. As shown in FIG. 5, the system control unit 211 includes a device management sub-unit 2111 and a task management sub-unit 2112. The device management sub-unit 2111 is configured to: add, after the action control system 200 is started, both primary devices and secondary devices among the pre-configured devices into a device dictionary, and determine, upon receiving the first instruction, whether a primary device and a secondary device targeted by the first instruction are in the device dictionary. The primary devices are devices that primarily execute the tasks, and the secondary devices are devices that assist the primary devices in executing the tasks. The task management sub-unit 2112 is configured to: store, after the action control system 200 is started, the methods for creating the tasks involved by the instructions into a task dictionary; determine, upon receiving the first instruction, whether the first task is in the task dictionary; and add, in response to the first task being started, a task instance of the first task into the task dictionary and remove the task instance from the task dictionary in response to the first task being completed or terminated.

As shown in FIG. 5, the device management sub-unit 2111, the task management sub-unit 2112, and the event management unit 212 are all communicatively connected to each other. As previously mentioned, the dictionaries may include an instruction dictionary, a device dictionary, and a task dictionary. The device dictionary and the task dictionary are respectively stored in the device management sub-unit 2111 and the task management sub-unit 2112. In an embodiment, when a "device controller" corresponding to a certain device is turned on and in a running state, the system control unit 211 is loaded. When loading the system control unit 211, all supported instructions in the back-end program set are acquired through the reflection mechanism and maintained in the instruction dictionary. When loading the system control unit 211, the device management sub-unit 2111 loads the pre-configured devices in all configuration files and maintains the pre-configured devices in the device dictionary. Moreover, one primary device and multiple secondary devices may exist in one "device controller". Taking a control device including three devices, that is, a robotic arm, a gripping jaw, and a guide rail as an example, the gripping jaw is connected to the end of the robotic arm, and the robotic arm moves along the guide rail. In this example, the robotic arm is the primary device, and the gripping jaw and the guide rail are the secondary devices. When the PMS issues a control instruction for the primary device among the three devices, the three devices act simultaneously according to the control instruction. The task management sub-unit 2112 stores the names of the tasks involved by the instructions and the methods for creating the tasks in the task dictionary.

In an embodiment, after the PMS issues the first instruction of "starting a device A", if the basic format of the request message corresponding to the instruction is correct, the system control unit 211 can receive an invoking request through the Web API. For example, a request log is printed first, and then the validity of the request message is checked according to the following manner. First, the validity of the basic parameters in the request message is checked. Then, the device management sub-unit 2111 in the system control unit 211 searches whether the device identifier exists from the device dictionary based on the device identifier of the target device contained in the request message. If the device identifier exists, the system control unit 211 searches whether the first instruction exists from the instruction dictionary based on the instruction information contained in the request message. For example, it is searched whether the first instruction belongs to one of the various system instructions, business instructions, and fault tolerance instructions listed in the foregoing examples. Subsequently, it is further determined whether the first instruction is a synchronous instruction or an asynchronous instruction. If the first instruction is a synchronous instruction, the result is returned only after the execution is completed. If the first instruction is an asynchronous instruction, the result is returned after the preparation phase of the first instruction is completed, and an asynchronous notification is returned after the execution phase of the first instruction is completed. Afterwards, the task management sub-unit 2112 creates a task and starts the task according to the type to which the first instruction belongs. For example, if the first instruction of "starting a device A" is a business instruction, the task management sub-unit 2112 creates an instance object of the first instruction through reflection. Specifically, the task management sub-unit 2112 finds the target device targeted by the first instruction from the device dictionary of the device management sub-unit 2111, and creates a task for the target device. Then, the task is checked. Specifically, checking the task may include a general check and a specific check. The general check includes, for example, checking the device status, parallel tasks, error impacts, and the like. The specific check may be a business-level check. After the task is checked successfully, the task is started. Specifically, the task may be divided into multiple serialized phases, and the multiple phases may be delegated to a serial machine for execution. Finally, the task instance of the task is added to the task dictionary, and the task instance is removed from the task dictionary when the task is completed or terminated.

In the above embodiment, by configuring the device management sub-unit and the task management sub-unit in the system control unit, the system control unit may better manage and control the devices and tasks in the system, improving the usability, manageability, and scalability of the system. In addition, this modular design is conducive to the division of work and functional independence of the system, improving the efficiency of development, maintenance, and upgrading. Furthermore, three independent modules are configured in the first control module to manage tasks, devices, and events, respectively, making management more orderly, significantly improving the operational efficiency of the action control system, achieving precise and efficient control of the devices, and improving the management efficiency and operational stability of the automated process.

In some embodiments, the first instruction includes an asynchronous instruction. The system control unit 211 is configured to: report first response information to the process control system 100, the first response information being a response by the system control unit 211 and the second control module 220 to the asynchronous instruction, and send second response information to the event management unit 212, the second response information being a response by the second control module 220 to the asynchronous instruction. The event management unit 212 is further configured to report the second response information to the process control system 100 as notification information. The first response information is the response to a synchronous portion of the asynchronous instruction, and the second response information is the response to an asynchronous portion of the asynchronous instruction.

It can be understood that a synchronous response and an asynchronous response refer to two different ways of communication and interaction between different programs or codes. In the synchronous response, communication among two or more programs is implemented based on a synchronous mechanism. In other words, after a program sends a request, it should wait until a response is received before continuing to execute subsequent operations. In this case, the execution order of the programs has a strict sequence and dependency, and steps should be executed in a certain order. A common synchronous communication mechanism is a blocking invocation, where the invoker waits indefinitely after sending a request until a response is received. In the asynchronous response, communication among two or more programs is implemented based on an asynchronous mechanism. In other words, after a program sends a request, it can continue to execute subsequent operations without waiting for a response. In this case, the execution order of the programs is uncertain, and each step may be executed independently. A common asynchronous communication mechanism is a non-blocking invocation, where the invoker returns immediately after sending the request and continues to execute other operations without waiting for the arrival of the response.

Exemplarily rather than restrictively, the second control module 220 is configured to execute the asynchronous portion of the asynchronous instruction only in response to the first response information indicating that the synchronous portion of the asynchronous instruction is executed successfully, and send the second response information to the event management unit 212. For example, the synchronous portion of the asynchronous instruction starts from receiving a request and ends when a response is replied. The asynchronous portion of the asynchronous instruction starts from the end of the synchronous portion and ends when an asynchronous notification response is sent. In an embodiment, the synchronous portion executes a check operation and a plan operation, and the asynchronous portion executes an execution operation. As previously mentioned, the suspending instruction among the system instructions is an asynchronous instruction. Referring again to FIG. 4, taking the first instruction being a suspending instruction as an example, the system control unit 211, upon receiving the suspending instruction, sends a task involved in the suspending instruction to the second control module 220. The second control module 220 executes the synchronous portion of the suspending instruction, for example, executes a check operation to determine whether to perform a suspending action. If the check operation is successful, the second control module 220 sends a response result indicating that the synchronous portion is executed successfully to the PMS via the system control unit 211. At this time, the response result replied by the synchronous portion is "success". Moreover, the second control module 220 controls the device to execute the actual suspending action. After the suspending action is completed, an asynchronous notification response is sent to the PMS via the system control unit 211 and the event management unit 212 successively, indicating that the suspending action ends. If the check operation of the synchronous portion fails, it indicates that the suspending instruction cannot be executed, and the second control module 220 sends a response result indicating that the synchronous portion is executed unsuccessfully to the PMS via the system control unit 211. At this time, the response result replied by the synchronous portion is "reject".

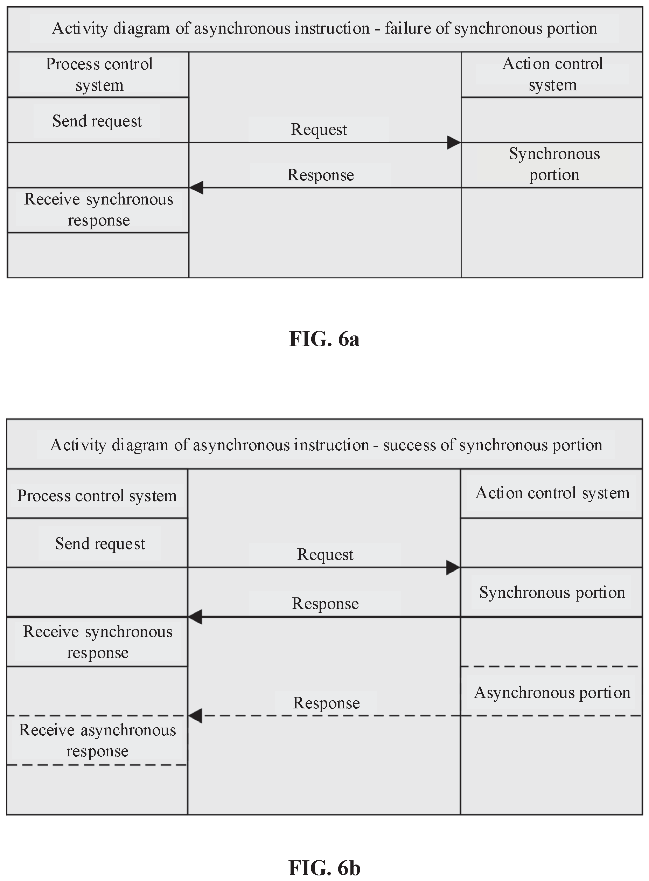

FIG. 6a and FIG. 6b show activity diagrams of an asynchronous instruction according to different embodiments of the present disclosure. As shown in FIG. 6a, if the synchronous portion of the asynchronous instruction is executed unsuccessfully, the response replied by the synchronous portion is "reject", and there is no asynchronous portion. As shown in FIG. 6b, if the synchronous portion of the asynchronous instruction is executed successfully, the response replied by the synchronous portion is "success", and there is an asynchronous portion. The asynchronous notification response is implemented by the event management unit 212 invoking a network interface provided by the process control system PMS. In an embodiment, the network interface is a hyper text transfer protocol (HTTP) interface or a Web interface.

In the above embodiment, the first instruction is an asynchronous instruction, and the execution of the asynchronous instruction may span multiple invocations. In a central processing unit, the execution of the asynchronous instruction may proceed simultaneously with the user program loop. The asynchronous instruction may be executed in a parallel processing manner, thereby further improving the operational efficiency of the action control system 200. In the above embodiment, the asynchronous portion of the asynchronous instruction is executed only in response to the synchronous portion of the asynchronous instruction being executed successfully, thereby simplifying the operation logic of the action control system and improving operational efficiency.

Referring again to FIG. 4, an event may be logic and interaction generated by the action control system 200 reporting a message to the process control system PMS. When the second control module 220 triggers an event, the event management unit 212 may notify the process control system 100, that is, the internal logic of the action control system 100 notifies the event management unit 212, and then the network interface provided by the process control system 100 is invoked to generate the operation logic. Compared with a query mechanism, an event notification mechanism has the advantage of high timeliness, but the notified information is incremental. If only the event notification mechanism is adopted, it is difficult to ensure the integrity of the information. In the embodiments of the present disclosure, a combination of the query mechanism and the event notification mechanism may be implemented by invoking instructions such as the status acquiring instruction (for example, acquiring device status and task status) in the system instruction. In this way, upon receiving the notification, the invoker may know that the status changes, and then acquire the full amount of information through the query mechanism. The combination of the query mechanism and the event notification mechanism may ensure both the high efficiency of the feedback information and the integrity of the feedback information.

In some embodiments, the feedback information includes error reporting information of at least one first error event. The event management unit 212 is further configured to: upon receiving the error reporting information, report the error reporting information to the process control system 100 as notification information, and control the target device to suspend a first action currently executed, where the first action is an action affected by the at least one first error event.

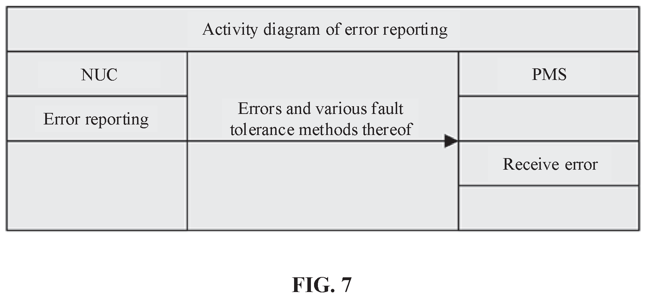

FIG. 7 shows an error reporting flowchart according to an embodiment of the present disclosure. As shown in FIG. 7, when a fault occurs in the target device, error reporting information of an error event is reported to the process control system 100 successively via the second control module 220 and the event management unit 212. Moreover, when receiving the error reporting information, the event management unit 212 may further control the target device through the second control module 220 to suspend execution of a current action. The current action may only include the action affected by the current error event. For example, when the target device simultaneously executes multiple actions and a task corresponding to a certain action has an error, the event management unit 212 controls the target device to suspend the action affected by the error, and other actions proceed normally.

In the error reporting information, the error is uniquely identified by using an error field. In an embodiment, the error field may be a task identifier, a status code, or a device unique identifier, and the same error information may not be reported repeatedly. While reporting the error, the event management unit 212 may provide a corresponding fault tolerance method.

In the above embodiment, the event management unit 212, upon receiving the error reporting information, may timely control the target device to suspend the execution of the currently affected action, thereby minimizing the adverse impact on the device and task due to the error, and ensuring the efficient and stable operation of the automated process.

In some embodiments, the first instruction includes a fault tolerance instruction. The event management unit 212 is further configured to:
for the error reporting information of each first error event among the at least one first error event,
   acquire first information of at least one fault tolerance method for the first error event, and report the first information to the process control system 100, to cause the process control system 100 to select a fault tolerance method from the at least one fault tolerance method based on the first information and issue the fault tolerance instruction; and
   upon receiving the fault tolerance instruction issued by the process control system 100, execute, based on a preset condition, a clearing operation for clearing the error reporting information of the first error event; and
control the target device to continue to execute the first action at least based on a case that the error reporting information of the at least one first error event is cleared.

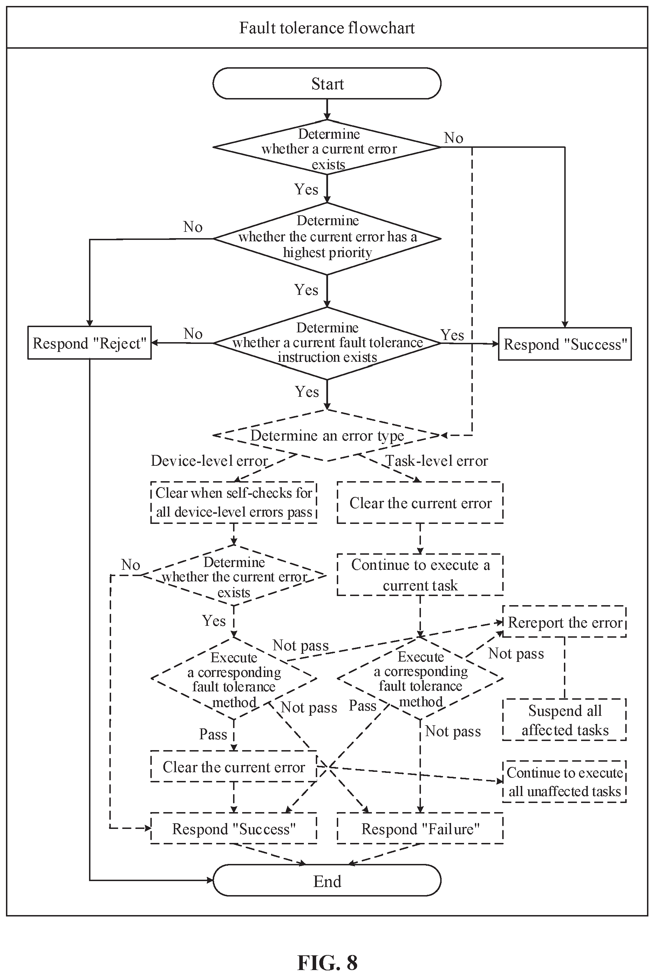

The first information may be information of multiple fault tolerance methods for the current error reporting information. The preset condition may be any suitable condition. FIG. 8 shows a fault tolerance flowchart according to an embodiment of the present disclosure. As shown in FIG. 8, the fault tolerance instruction is an instruction for the process control system 100 to select a certain fault tolerance method in response to an error. The fault tolerance instruction is an asynchronous instruction. Which fault tolerance methods are available for the error may be determined by the action control system 200 according to specific circumstances. It can be specifically understood that the event management unit 212 may search for multiple fault tolerance methods corresponding to the first error event, and send the multiple fault tolerance methods to the process control system 100. The process control system 100 determines one of the fault tolerance methods and issues the fault tolerance instruction. Upon receiving the fault tolerance instruction, the system control unit 211 may find the device involved in the fault tolerance instruction and transfer the invocation to the event management unit 212. The event management unit 212 may implement the clearing operation based on the preset condition. The clearing operation may be directly executed, or the type of the error may be determined or the error may be checked before executing the clearing operation. If the type of the current error meets a preset type requirement or the check result meets a preset requirement, the clearing operation is executed. Then, fault tolerance may be performed according to the current fault tolerance method. If fault tolerance is completed on all errors and the device status is ready, the suspended task may continue to be executed.

In the above embodiment, the process control system issues the fault tolerance instruction, and the event management unit acquires the fault tolerance instruction and executes the error clearing operation. After the first error event is cleared, the target device continues to execute the first action. When the first error event occurs, the event management unit may quickly handle the first error event and recover the target device to continue executing the first action, ensuring the stability and reliability of operation of the action control system.

In some embodiments, the event management unit 212 is further configured to: determine a priority of the at least one first error event; and execute a clearing operation for a current first error event in response to determining that the priority of the current first error event is higher than priorities of other first error events.

According to an embodiment of the present disclosure, when the event management unit 212 simultaneously acquires multiple error events, the priority may be determined according to the types of the error events. In an embodiment, errors may be divided into device-level errors and task-level errors according to whether an error is associated with a task. Different fault tolerance methods may correspond to different types of errors. The device-level errors may be errors that occur during device reset, heartbeat, or receiving an error notification from a physical device, for example, device initialization failure and device connection disconnection. The client may determine a self-check method for each device-level error according to the actual situation, so that the action control system knows under what circumstances this error is considered cleared. The client may further determine a corresponding fault tolerance method according to the actual situation. The task-level errors may be errors that occur during a certain phase of task execution, for example, a gripping jaw implementing an empty grasping, code scanning failure, and the like. The client may determine whether retry or ignore is available in the fault tolerance method for each task-level error at each phase according to the actual situation. The retry means re-executing this phase, and the ignore means skipping this phase. In an embodiment, the error events are sorted in descending order of the priority as a device out-of-control level error, a device-level error, and a task-level error. When reporting a device-level error, the device specifies whether the device-level error is an out-of-control error. For example, in out-of-control situations such as connection disconnection, the device fails to be automatically controlled, and thus fault tolerance for other errors is executed only after ensuring that the device is not out of control. For example, if the current error event includes a device out-of-control level error, fault tolerance for the device out-of-control level error is executed preferentially. By sequentially executing fault tolerance according to the priority, reasonable execution logic is achieved and the orderly and efficient execution of the fault tolerance instruction are ensured.

In the above solution, the event management unit may orderly complete clearing operations for the error events according to the priority of the error events, which avoids the occurrence of failure to a great extent, and exhibits the advantages of a clear internal logical relationship and stable operation, thus further improving the stability and reliability of operation of the action control system and ensuring the efficient and stable operation of the automated process.

In some embodiments, the first error event includes a task-level error event. The event management unit 212 is further configured to: in response to determining that one of the at least one first error event belongs to the task-level error event, directly execute a clearing operation for the task-level error event, and control the target device to continue to execute the first action; execute a first fault tolerance task for the task-level error event based on a fault tolerance method selected by the process control system 100 from the at least one fault tolerance method; and in response to the first fault tolerance task being executed unsuccessfully, upload error reporting information of a second error event, and control the target device to suspend a second action. The second action is an action currently affected by the second error event. It can be understood that the first fault tolerance task is a fault tolerance task for the task-level error.

Referring again to FIG. 8, as shown in the figure, the error events may be divided into device-level error events and task-level error events according to whether the first error event is associated with a task. As previously mentioned, the task-level errors are errors that occur during task execution. The task-level errors include, for example, a gripping jaw implementing an empty grasping, code scanning failure, and the like. According to the embodiment of the present disclosure, when the first error event is a task-level error event, the event management unit 212 may directly execute the clearing operation. Then, the fault tolerance task for the task-level error event may be executed according to the fault tolerance method selected by the process control system 100. In an embodiment, the fault tolerance method for the task-level error may include retry, ignore, and the like. The retry means re-executing this phase, and the ignore means skipping this phase. For example, the previous error event is directly cleared, and a fault tolerance task for retrying is executed. When the execution of the fault tolerance task fails, the event management unit 212 may report the error reporting information of the second error event to the process control system 100, and control the target device to suspend the second action. It can be understood that the error reporting information of the second error event reported by the event management unit 212 may be the same as the previously reported error reporting information of the first error event. In some special cases, the error reporting information of the second error event may be different from the previously reported error reporting information of the first error event. The second action is an action currently affected by the second error event. When the second error event is the same as the first error event, the second action may be the same as the first action. When the second error event is different from the first error event, the second action may be different from the first action.

In the above embodiment, when the first error event is a task-level error event, the event management unit may directly execute the clearing operation and execute the fault tolerance task for the task-level error event. If the fault tolerance task fails, the error event is re-reported to the process control system. This fault tolerance process is reasonable, the logic is simple, and the control efficiency of the device is high, ensuring the efficient operation of the automated process.

In some embodiments, the first error event includes a device-level error event. The event management unit is further configured to: in response to determining that one of the at least one first error event belongs to the device-level error event, execute a self-check operation for the device-level error event; and in response to the self-check operation being executed successfully, execute a clearing operation for the device-level error event.

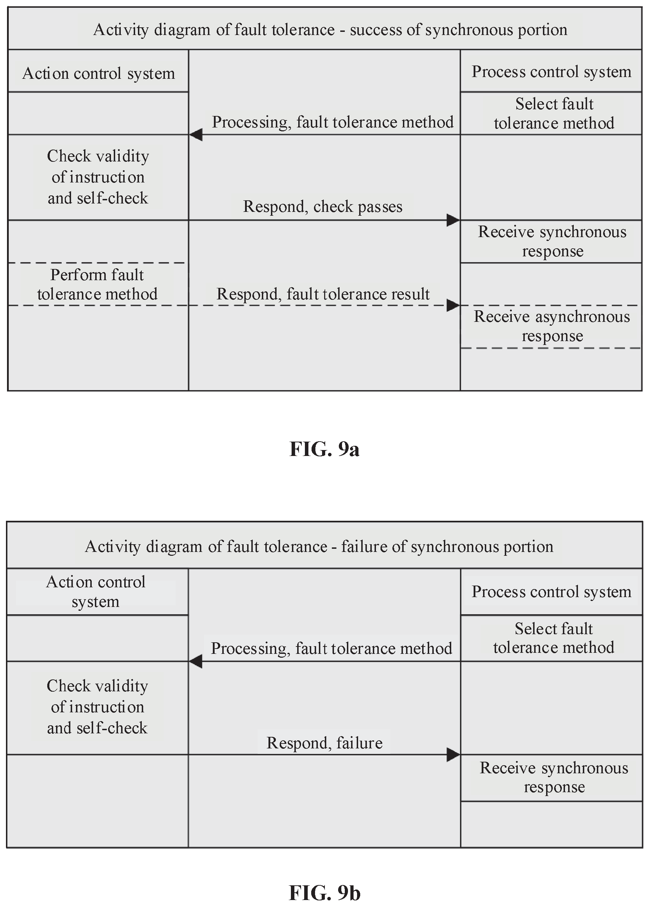

As previously mentioned, the fault tolerance instruction is an asynchronous instruction. Therefore, the fault tolerance instruction includes a synchronous portion and an asynchronous portion. The synchronous portion starts from receiving a request and ends when a response is replied; and the asynchronous portion starts from the end of the synchronous portion and ends when an asynchronous notification response is sent. The synchronous portion of the fault tolerance instruction for the device-level error event may involve the self-check operation for the device-level error event. FIG. 9a and FIG. 9b show activity diagrams of fault tolerance according to different embodiments of the present disclosure. In combination with FIG. 8 and FIG. 9a, when the first error event is a device-level error event, the event management unit 212 first executes the synchronous portion of the fault tolerance instruction, that is, the self-check operation. When the self-check is successful, a response of success of the synchronous portion is sent to the process control system, and the event management unit continues to execute the clearing operation for the first error event. As previously mentioned, the device-level error event usually occurs during device reset, heartbeat, or upon receiving an error notification from a physical device under other circumstances. For example, the device-level error event includes device initialization failure and device connection disconnection. In an embodiment, a self-check method for each device-level error may be determined according to the actual situation, so that the action control system 200 knows under what circumstances this error is considered cleared. The client may further determine a corresponding fault tolerance method according to the actual situation.

In the above embodiment, when the error event is a device-level error event with a relatively high priority, the event management unit first executes a self-check operation for the device-level error event, and only when the self-check operation is successful does the event management unit execute the clearing operation for the device-level error event. In this way, the accuracy of the fault tolerance operation is effectively improved, and the waste of computing resources is avoided.

In some embodiments, the event management unit 212 is further configured to: in response to the self-check operation being executed unsuccessfully, execute a second fault tolerance task for the device-level error event based on a fault tolerance method selected by the process control system from the at least one fault tolerance method; in response to the second fault tolerance task being executed successfully, execute the clearing operation for the device-level error event, and control the target device to continue to execute the first action; and in response to the second fault tolerance task being executed unsuccessfully, upload error reporting information of a third error event, and control the target device to suspend a third action. The third action is an action currently affected by the third error event.

In combination with FIG. 8 and FIG. 9b, when the self-check operation fails, the event management unit 212 executes the fault tolerance task according to the fault tolerance method for the current device-level error event selected by the process control system 100. When the fault tolerance task is executed successfully, the current error is cleared, and the target device is controlled to continue to execute the first action. When the clearing operation fails, the error reporting information of the third error event is reported to the process control system 100, and the target device is controlled to suspend the third action. Similar to the error reporting information of the second error event, the error reporting information of the third error event reported by the event management unit 212 may be the same as or different from the previously reported error reporting information of the first error event. The second action may be the same as or different from the first action.

The execution logic of the above fault tolerance instruction for the device-level error event is orderly and reasonable, which ensures that the device is always in a controllable state, thereby ensuring the overall stability and reliability of the action control system, and ensuring the efficient and stable operation of the automated process.

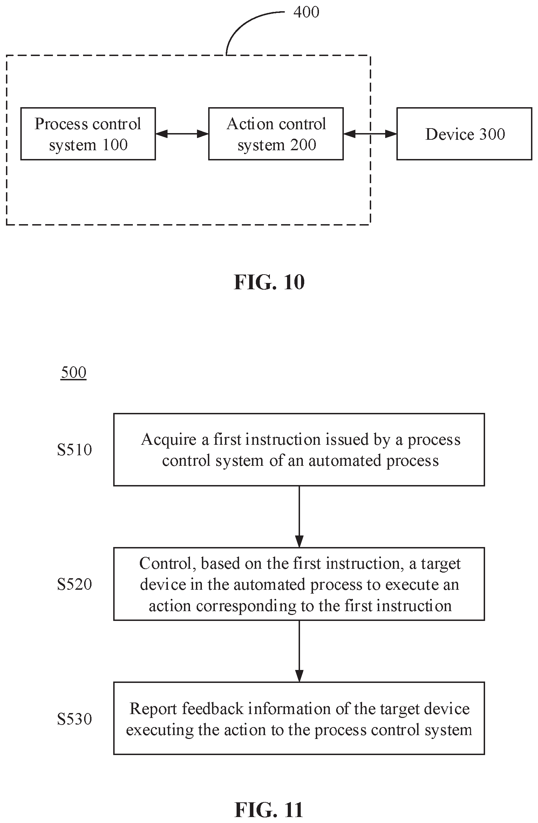

According to a second aspect of the present disclosure, a management system for an automated process is further provided. FIG. 10 shows a schematic block diagram of a management system 400 for an automated process according to an embodiment of the present disclosure. As shown in the figure, the management system 400 includes a process control system 100 of the automated process and the above-described action control system 200.

In the management system for the automated process, precise control for various types of devices in the automated process is achieved, and a good interaction between the devices and the process control system is achieved. Moreover, for each device, the control logic of the action control system does not depend on the process control system, and thus the operations of different devices do not interfere with each other. As a result, the automated process runs stably, and maintenance costs are low. In addition, in a case that a device in the automated process is changed, it is not required to update program code for controlling the device in the process control system, and it is only required to add a control module corresponding to the newly connected device into the action control system according to this solution. Therefore, this solution offers the advantages of low iteration cost and convenient maintenance. Consequently, the automated process achieves high management efficiency, low management costs, and an excellent user experience.

According to a third aspect of the present disclosure, an action control method is further provided. FIG. 11 shows a schematic flowchart of an action control method 500 according to an embodiment of the present disclosure. As shown in FIG. 11, the action control method 500 includes steps S510 to S530.

In step S510, a first instruction issued by a process control system of an automated process is acquired.

In step S520, based on the first instruction, a target device in the automated process is controlled to execute an action corresponding to the first instruction.

In step S530, feedback information of the target device executing the action is reported to the process control system.

With the above action control method, precise control for various types of devices in the automated process is achieved, and a good interaction between the devices and the process control system is achieved. Moreover, for each device, the control logic of the action control system does not depend on the process control system, and thus the operations of different devices do not interfere with each other. As a result, the automated process runs stably, and maintenance costs are low. Furthermore, the automated process achieves high management efficiency, low management costs, and an excellent user experience.

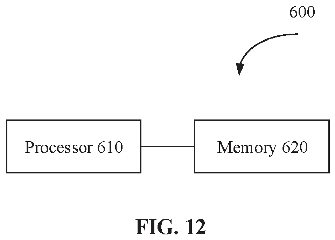

According to a fourth aspect of the present disclosure, an electronic device is further provided. FIG. 12 shows a schematic diagram of an electronic device 600 according to an embodiment of the present disclosure. As shown in the figure, the electronic device 600 includes a processor 610 and a memory 620. The memory 620 stores computer program instructions, and the computer program instructions, when executed by the processor 610, are configured to perform the above-described action control method 500.

According to a fifth aspect of the present disclosure, a storage medium is further provided. The storage medium stores program instructions, and the program instructions, when executed, are configured to perform the above-described action control method 500.

### Embodiments

Embodiment 1. An action control system, comprising a first control module and a second control module, where
the first control module is connected to a process control system of an automated process and the second control module, and is configured to acquire a first instruction issued by the process control system; and
the second control module is connected to one or more devices in the automated process, and is configured to control, based on the first instruction, a target device to execute an action corresponding to the first instruction, and report feedback information of the target device executing the action to the process control system via the first control module.

Embodiment 2. The action control system according to Embodiment 1, where
the first control module is further configured to:
upon receiving the first instruction, manage the first instruction, the target device targeted by the first instruction, and a first task involved by the first instruction to create and start the first task, and
report the feedback information sent by the second control module to the process control system; and
the second control module is further configured to:
   after the first task is started, execute a device control operation based on the first task to control the target device to execute an action corresponding to the first task, and
   send the feedback information to the first control module, where
   the device control operation comprises instruction invoking and status maintenance for a physical device of the target device.

Embodiment 3. The action control system according to Embodiment 1 or 2, where the first control module comprises a system control unit and an event management unit connected to each other, where
the system control unit is configured to:
add, after the action control system is started, instructions supported in the action control system, pre-configured devices, and methods for creating tasks involved by the instructions into respective dictionaries, to store names of targeted devices of the instructions, names of the tasks involved by the instructions, and the methods for creating the tasks, and
create and start, upon receiving the first instruction, the first task related to the first instruction based on the dictionaries; and
the event management unit is configured to report an event involved in the first task and an event involved in the feedback information sent by the second control module to the process control system.

Embodiment 4. The action control system according to any one of Embodiments 1 to 3, where the system control unit comprises a device management sub-unit and a task management sub-unit, where
the device management sub-unit is configured to:
add, after the action control system is started, both primary devices and secondary devices among the pre-configured devices into a device dictionary, and
determine, upon receiving the first instruction, whether a primary device and a secondary device targeted by the first instruction are in the device dictionary, where
the primary devices are devices that primarily execute the tasks, and the secondary devices are devices that assist the primary devices in executing the tasks; and
the task management sub-unit is configured to:
   store, after the action control system is started, the methods for creating the tasks involved by the instructions into a task dictionary,
   determine, upon receiving the first instruction, whether the first task is in the task dictionary, and
   add, in response to the first task being started, a task instance of the first task into the task dictionary, and remove, in response to the first task being completed or terminated, the task instance from the task dictionary.

Embodiment 5. The action control system according to any one of Embodiments 1 to 4, where the first instruction comprises an asynchronous instruction, where
the system control unit is further configured to: report first response information to the process control system, the first response information being a response by the system control unit and the second control module to the asynchronous instruction, and send second response information to the event management unit, the second response information being a response by the second control module to the asynchronous instruction; and
the event management unit is further configured to report the second response information to the process control system as notification information, where
the first response information is the response to a synchronous portion of the asynchronous instruction, and the second response information is the response to an asynchronous portion of the asynchronous instruction.

Embodiment 6. The action control system according to any one of Embodiments 1 to 5, where the second control module is configured to execute the asynchronous portion of the asynchronous instruction only in response to the first response information indicating that the synchronous portion of the asynchronous instruction is executed successfully, and send the second response information to the event management unit.

Embodiment 7. The action control system according to any one of Embodiments 1 to 6, where the feedback information comprises error reporting information of at least one first error event, where
the event management unit is further configured to: upon receiving the error reporting information, report the error reporting information to the process control system as notification information, and control the target device to suspend a first action currently executed, where the first action is an action affected by the at least one first error event.

Embodiment 8. The action control system according to any one of Embodiments 1 to 7, where the first instruction comprises a fault tolerance instruction, where
the event management unit is further configured to:
for the error reporting information of each first error event among the at least one first error event,
   acquire first information of at least one fault tolerance method for the first error event, and report the first information to the process control system, to cause the process control system to select a fault tolerance method from the at least one fault tolerance method based on the first information and issue the fault tolerance instruction; and
   upon receiving the fault tolerance instruction issued by the process control system, execute, based on a preset condition, a clearing operation for clearing the error reporting information of the first error event; and
control the target device to continue to execute the first action at least based on a case that the error reporting information of the at least one first error event is cleared.

Embodiment 9. The action control system according to any one of Embodiments 1 to 8, where the event management unit is further configured to:
determine a priority of the at least one first error event; and
execute, in response to determining that a priority of a current first error event is higher than priorities of other first error events, a clearing operation for the current first error event.

Embodiment 10. The action control system according to any one of Embodiments 1 to 9, where the at least one first error event comprises a task-level error event, where
the event management unit is further configured to:
in response to determining that one of the at least one first error event belongs to the task-level error event, directly execute a clearing operation for the task-level error event, and control the target device to continue to execute the first action;
execute a first fault tolerance task for the task-level error event based on a fault tolerance method selected by the process control system from the at least one fault tolerance method; and
in response to the first fault tolerance task being executed unsuccessfully, upload error reporting information of a second error event, and control the target device to suspend a second action, where
the second action is an action currently affected by the second error event.

Embodiment 11. The action control system according to any one of Embodiments 1 to 10, where the at least one first error event comprises a device-level error event, where
the event management unit is further configured to:
in response to determining that one of the at least one first error event belongs to the device-level error event, execute a self-check operation for the device-level error event; and
in response to the self-check operation being executed successfully, execute a clearing operation for the device-level error event.

Embodiment 12. The action control system according to any one of Embodiments 1 to 11, where the event management unit is further configured to:
in response to the self-check operation being executed unsuccessfully, execute a second fault tolerance task for the device-level error event based on a fault tolerance method selected by the process control system from the at least one fault tolerance method;
in response to the second fault tolerance task being executed successfully, execute the clearing operation for the device-level error event, and control the target device to continue to execute the first action; and
in response to the second fault tolerance task being executed unsuccessfully, upload error reporting information of a third error event, and control the target device to suspend a third action, where
the third action is an action currently affected by the third error event.

Embodiment 13. The action control system according to any one of Embodiments 1 to 12, where the action control system acquiring the first instruction issued by the process control system comprises:
acquiring a type, a device identifier, an Internet protocol, IP, address, and a port number of the target device targeted by the first instruction.

Embodiment 14. A management system for an automated process, comprising a process control system of the automated process and the action control system according to any one of Embodiments 1 to 13.

Embodiment 15. An action control method, comprising:
acquiring a first instruction issued by a process control system of an automated process;
controlling, based on the first instruction, a target device in the automated process to execute an action corresponding to the first instruction; and
reporting feedback information of the target device executing the action to the process control system.

Embodiment 16. An electronic device, comprising a processor and a memory, where the memory stores computer program instructions, and the computer program instructions, when executed by the processor, are configured to perform the action control method according to Embodiment 15.

Embodiment 17. A storage medium, storing program instructions, where the program instructions, when executed, are configured to perform the action control method according to Embodiment 15.

Although example embodiments have been described herein with reference to the drawings, it should be understood that the above example embodiments are merely exemplary and are not intended to limit the scope of the present disclosure thereto. Those skilled in the art can make various changes and modifications therein without departing from the scope and spirit of the present disclosure. All these changes and modifications are intended to be included within the scope of the present disclosure as claimed in the appended claims.

Those skilled in the art can appreciate that the units and algorithm steps of each example described in conjunction with the embodiments disclosed herein may be implemented by electronic hardware, or a combination of computer software and electronic hardware. Whether these functions are executed by hardware or software depends on the specific application and design constraints of the technical solution. Professional technicians can use different methods to implement the described functions for each specific application, but such implementation should not be considered beyond the scope of the present disclosure.

In the several embodiments provided in the present disclosure, it should be understood that the disclosed devices and methods can be implemented in other ways. For example, the device embodiments described above are merely illustrative. For example, the division of the units is only a logical function division, and there may be other division manners in actual implementation, for example, multiple units or components are combined or integrated into another device, or some features are ignored or not executed.

In the specification provided herein, a large number of specific details are described. However, it can be understood that the embodiments of the present disclosure can be practiced without these specific details. In some instances, well-known methods, structures, and techniques are not shown in detail so as not to obscure the understanding of this specification

The above is only the specific implementation of the present disclosure or the description of the specific implementation, and the protection scope of the present disclosure is not limited thereto. Any person familiar with the technical field can easily think of changes or substitutions within the technical scope disclosed in the present disclosure, and these should be covered by the protection scope of the present disclosure. The protection scope of the present disclosure should be based on the protection scope of the claims.

## Claims

1. An action control system, **characterized by** comprising a first control module and a second control module, wherein
the first control module is connected to a process control system of an automated process and the second control module, and is configured to acquire a first instruction issued by the process control system; and
the second control module is connected to one or more devices in the automated process, and is configured to control, based on the first instruction, a target device to execute an action corresponding to the first instruction, and report feedback information of the target device executing the action to the process control system via the first control module.

2. The action control system according to claim 1, **characterized in that** the first control module is further configured to:
upon receiving the first instruction, manage the first instruction, the target device targeted by the first instruction, and a first task involved by the first instruction to create and start the first task, and
report the feedback information sent by the second control module to the process control system; and
the second control module is further configured to:
after the first task is started, execute a device control operation based on the first task to control the target device to execute an action corresponding to the first task, and
send the feedback information to the first control module, wherein
the device control operation comprises instruction invoking and status maintenance for a physical device of the target device.

3. The action control system according to claim 2, **characterized in that** the first control module comprises a system control unit and an event management unit connected to each other, wherein
the system control unit is configured to:
add, after the action control system is started, instructions supported in the action control system, pre-configured devices, and methods for creating tasks involved by the instructions into respective dictionaries, to store names of targeted devices of the instructions, names of the tasks involved by the instructions, and the methods for creating the tasks, and
create and start, upon receiving the first instruction, the first task related to the first instruction based on the dictionaries; and
the event management unit is configured to report an event involved in the first task and an event involved in the feedback information sent by the second control module to the process control system.

4. The action control system according to claim 3, **characterized in that** the system control unit comprises a device management sub-unit and a task management sub-unit, wherein
the device management sub-unit is configured to:
add, after the action control system is started, both primary devices and secondary devices among the pre-configured devices into a device dictionary, and
determine, upon receiving the first instruction, whether a primary device and a secondary device targeted by the first instruction are in the device dictionary, wherein
the primary devices are devices that primarily execute the tasks, and the secondary devices are devices that assist the primary devices in executing the tasks; and
the task management sub-unit is configured to:
store, after the action control system is started, the methods for creating the tasks involved by the instructions into a task dictionary,
determine, upon receiving the first instruction, whether the first task is in the task dictionary, and
add, in response to the first task being started, a task instance of the first task into the task dictionary, and remove, in response to the first task being completed or terminated, the task instance from the task dictionary.

5. The action control system according to claim 3, **characterized in that** the first instruction comprises an asynchronous instruction, wherein
the system control unit is further configured to: report first response information to the process control system, the first response information being a response by the system control unit and the second control module to the asynchronous instruction, and send second response information to the event management unit, the second response information being a response by the second control module to the asynchronous instruction; and
the event management unit is further configured to report the second response information to the process control system as notification information, wherein
the first response information is the response to a synchronous portion of the asynchronous instruction, and the second response information is the response to an asynchronous portion of the asynchronous instruction.

6. The action control system according to claim 5, **characterized in that** the second control module is configured to execute the asynchronous portion of the asynchronous instruction only in response to the first response information indicating that the synchronous portion of the asynchronous instruction is executed successfully, and send the second response information to the event management unit.

7. The action control system according to any one of claims 3 to 6, **characterized in that** the feedback information comprises error reporting information of at least one first error event, wherein
the event management unit is further configured to: upon receiving the error reporting information, report the error reporting information to the process control system as notification information, and control the target device to suspend a first action currently executed, wherein the first action is an action affected by the at least one first error event.

8. The action control system according to claim 7, **characterized in that** the first instruction comprises a fault tolerance instruction, wherein
the event management unit is further configured to:
for the error reporting information of each first error event among the at least one first error event,
acquire first information of at least one fault tolerance method for the first error event, and report the first information to the process control system, to cause the process control system to select a fault tolerance method from the at least one fault tolerance method based on the first information and issue the fault tolerance instruction; and
upon receiving the fault tolerance instruction issued by the process control system, execute, based on a preset condition, a clearing operation for clearing the error reporting information of the first error event; and
control the target device to continue to execute the first action at least based on a case that the error reporting information of the at least one first error event is cleared.

9. The action control system according to claim 8, **characterized in that** the event management unit is further configured to:
determine a priority of the at least one first error event; and
execute, in response to determining that a priority of a current first error event is higher than priorities of other first error events, a clearing operation for the current first error event.

10. The action control system according to claim 8, **characterized in that** the at least one first error event comprises a task-level error event, wherein
the event management unit is further configured to:
in response to determining that one of the at least one first error event belongs to the task-level error event, directly execute a clearing operation for the task-level error event, and control the target device to continue to execute the first action;
execute a first fault tolerance task for the task-level error event based on a fault tolerance method selected by the process control system from the at least one fault tolerance method; and
in response to the first fault tolerance task being executed unsuccessfully, upload error reporting information of a second error event, and control the target device to suspend a second action, wherein
the second action is an action currently affected by the second error event.

11. The action control system according to claim 8, **characterized in that** the at least one first error event comprises a device-level error event, wherein
the event management unit is further configured to:
in response to determining that one of the at least one first error event belongs to the device-level error event, execute a self-check operation for the device-level error event; and
in response to the self-check operation being executed successfully, execute a clearing operation for the device-level error event.

12. The action control system according to claim 11, **characterized in that** the event management unit is further configured to:
in response to the self-check operation being executed unsuccessfully, execute a second fault tolerance task for the device-level error event based on a fault tolerance method selected by the process control system from the at least one fault tolerance method;
in response to the second fault tolerance task being executed successfully, execute the clearing operation for the device-level error event, and control the target device to continue to execute the first action; and
in response to the second fault tolerance task being executed unsuccessfully, upload error reporting information of a third error event, and control the target device to suspend a third action, wherein
the third action is an action currently affected by the third error event.

13. The action control system according to any one of claims 1 to 6, **characterized in that**
the action control system acquiring the first instruction issued by the process control system comprises:
acquiring a type, a device identifier, an Internet protocol, IP, address, and a port number of the target device targeted by the first instruction.

14. A management system for an automated process, **characterized by** comprising a process control system of the automated process and the action control system according to any one of claims 1 to 13.

15. An action control method, **characterized by** comprising:
acquiring a first instruction issued by a process control system of an automated process;
controlling, based on the first instruction, a target device in the automated process to execute an action corresponding to the first instruction; and
reporting feedback information of the target device executing the action to the process control system.

16. An electronic device, **characterized by** comprising a processor and a memory, wherein the memory stores computer program instructions, and the computer program instructions, when executed by the processor, are configured to perform the action control method according to claim 15.

17. A storage medium, **characterized by** storing program instructions, wherein the program instructions, when executed, are configured to perform the action control method according to claim 15.
